# EUROPÄISCHE PATENTSCHRIFT

(11) **EP 2 945 722 B1**
(45) Veröffentlichungstag und Bekanntmachung des Hinweises auf die Patenterteilung: **14.08.2019**
(21) Anmeldenummer: 13826840.4
(22) Anmeldetag: 23.12.2013
(51) Int. Cl.: B01D 39/08, B01D 39/16

(54) **FILTERMEDIUM**
FILTER MEDIUM
MATÉRIAU DE FILTRATION

(30) Priorität: 19.01.2013 DE 102013000939
(43) Veröffentlichungstag der Anmeldung: 25.11.2015
(60) Teilanmeldung: 19183774.9
(73) Patentinhaber: Hydac Filtertechnik GmbH, 66280 Sulzbach/Saar (DE)
(72) Erfinder: KOCH, Edwin, 66636 Tholey (DE); SCHWENDER, Matthias, 66459 Kirkel (DE)
(74) Vertreter: Bartels und Partner, Patentanwälte
(86) Internationale Anmeldenummer: PCT/EP2013/003937
(87) Internationale Veröffentlichungsnummer: WO 2014/111123

(56) Entgegenhaltungen:
- WO-A1-2005/082485
- DE-A1-102010 025 217
- DE-A1-102010 025 220

## Beschreibung

Die Erfindung betrifft ein Filtermedium zum Abreinigen von Fluiden gemäß der Merkmalsausgestaltung des Oberbegriffes des unabhängigen Patentanspruchs 1.

Filtermedien zur Herstellung von austauschbaren Filterelementen in hydraulischen Anlagen sind in mannigfacher Ausgestaltung bekannt und bestehen typischerweise aus einem mehrlagigen Filtervlies mit einer Stützlage auf einer oder beiden Außenseiten, Anström- oder Abströmseite, des Filtervlieses. Die Filterelemente werden vom abzureinigenden Fluid, beispielsweise einer Hydraulikflüssigkeit, durchströmt, wobei sich von der Anströmseite zur Abströmseite eine zum Teil beträchtliche Druckdifferenz ergibt. Um dieser Druckdifferenz und auch dynamischen Strömungskräften im Unfiltrat standhalten zu können, weisen die Filtermedien, aus denen entsprechende Filterelemente gefertigt sind, Stützlagen, auch Stützstrukturen genannt, auf. Die Stützlagen unterliegen einer starken Druckwechselbelastung im Betrieb des Filterelements und sind beispielsweise aus Metallgeweben, insbesondere Geweben aus Edelstahldrähten, oder aus Kunststoffgittern gebildet.

Die EP 0 402 099 B1 offenbart einen Verstärkungswebstoff zur Verwendung für faserverstärkte Verbundwerkstoffe, umfassend eine Vielzahl von Kettfäden aus Verstärkungsfilamentgarnen, die sich in die Längsrichtung des genannten Verstärkungswebstoffes parallel zueinander in einer bahnartigen Form erstrecken, wobei die genannten Kettfäden in der Querrichtung zum genannten Verstärkungswebstoff angeordnet sind, um einen Abschnitt mit hoher Dichte aus den genannten Kettfäden und einen Abschnitt mit geringer Dichte aus den genannten Kettfäden zu bilden, und eine Vielzahl von Schussfäden aus Verstärkungsfilamentgarnen, die sich in eine Richtung über die genannten Kettfäden und schräg zur Ausdehnungsrichtung der genannten Kettfäden parallel zueinander in einer bahnartigen Form erstrecken.

Bei einem aus DE 10 2010 025 220 A1 bekannten Filtermedium ist ein als Stützstruktur dienendes Kunststoffgitter aus zwei Gruppen von Linienelementen gebildet, die zwischen sich Durchlassöffnungen begrenzen, wobei eine der Gruppen schräg mit einem vorgebbaren Winkel zur Längs- und Querrichtung der Bahn verläuft und die andere Gruppe parallel zur Längs- oder Querrichtung der Bahn verläuft. Durch die gitter- bzw. rasterförmige Anordnung der Linienelemente wird eine gleichmäßige, über die Fläche des Kunststoffgitters homogene Formstabilität und Filtrationscharakteristik des Filtermediums erreicht.

Die EP 1 436 062 B1 betrifft ein Filterelement für Flüssigkeiten mit einem Filtermaterial und mit einer das Filtermaterial bezogen auf die Durchströmrichtung des Filterelements zumindest reinseitig abstützenden gewebeförmigen Stützstruktur, wobei die Stützstruktur aus einem Kunststoffmaterial gefertigte und elektrisch leitfähige Elemente aufweist. Die Stützstruktur bildet ein Stützgewebe aus, das sowohl Metall- als auch Kunststofffäden aufweist und flächig am Filtermaterial anliegt. Das Filtermaterial und das Stützgewebe sind sternförmig gefaltet oder plissiert, wobei die Metallfäden parallel zu den Falten des Stützgewebes verlaufen.

Ein Filtermedium der eingangs genannten Art ist beispielsweise aus DE 10 2008 029 443 A1 bekannt. Das bekannte Filtermedium ist als eine Art Filterbahn ausgebildet bestehend aus einer ersten Lage Stützgewebe, einer zweiten Lage als Schutzvlies, einer dritten Lage als Hauptvlies, gegebenenfalls einer weiteren Lage eines sich anschließenden weiteren Schutzvlieses und jedenfalls einer vierten Lage eines erneuten Stützgewebes. Die Stützgewebe sind aus einzelnen Kunststofffäden aufgebaut. Die das Kunststoffgewebe bildenden Linienelemente aus Kunststofffäden verlaufen schräg zur Längs- und Querrichtung der Filterbahn, welche plisseeartig zu einem Filterelement aufgefaltet ist, und die Abstände zwischen den Linienelementen dienen als freie Durchlassöffnungen für das Durchströmen des abzufiltrierenden Fluids.

Bis auf das Kunststoffgitter nach der DE 10 2010 025 220 A1, bei der die Kunststofffäden oder einzelnen Linienelemente über Knoten- oder Kreuzungsstellen fest miteinander verbunden eine durchströmbare Gitterstruktur ergeben, betreffen die sonstigen genannten Entgegenhaltungen aus Kett- und Schussfäden als Linienelemente aufgebaute Metall- und/oder Kunststoffgewebe, bei denen die Fäden oder Linienelemente sich zueinander innerhalb des Gewebebundes verschieben können mit der Folge, dass die Durchlassöffnungen zwischen den Fäden oder Linienelementen nicht konstant sind, insbesondere durch den sich verschiebenden Gewebeverbund verschlossen werden können, was sowohl die Stütz- als auch die Durchlässigkeitseigenschaften der bekannten als Stützlage fungierenden Gewebe entsprechend verschlechtern kann.

Die WO 2005/082485 A1 beschreibt ein weiteres Filtermedium.

Ausgehend von diesem Stand der Technik stellt sich die Erfindung die Aufgabe, die Stütz- und Durchlässigkeitseigenschaften eines als Stützlage dienenden Kunststoffgitters ebenso weiter zu verbessern wie seine Anschmiegeigenschaft an die zu umfassende jeweilige Filterlage.

Diese Aufgabe wird gelöst durch ein Filtermedium mit den Merkmalen des Patentanspruchs 1 in seiner jeweiligen Gesamtheit.

Die dahingehende Aufgabe ist gemäß der Merkmalsausgestaltung des Patentanspruches 1 dadurch gelöst, dass die Linienelemente mit den kleineren Durchmessern an dem jeweiligen Knoten eine Versatzstelle aufweisen und dass der Versatz an dieser Versatzstelle etwa dem kleineren Durchmesser der Linienelemente entspricht.

Ein Filtermedium kann zwei Gruppen von Linienelementen annähernd rechtwinklig zueinander verlaufen und rechteckförmige Durchlassöffnungen begrenzen.

Die einzelnen Linienelemente bilden erfindungsgemäß Rechtecke aus, deren beiden Seiten schräg zur Längs- und zur Querrichtung angeordnet sind. Durch die "gekippte" Rechteckstruktur werden Widerstände für ein Durchgangsfluid minimiert und somit weniger Verwirbelungen und ein geringerer Differenzdruck im erfindungsgemäßen Filtermedium erreicht. Beim Auffalten des Filtermediums zu einem Filterelement, wobei das Auffalten typischerweise in Querrichtung erfolgt, sind die Linienelemente beider Gruppen idealerweise stets schräg zum entsprechenden Faltenberg bzw. Faltental ausgerichtet. Durch die erfindungsgemäße Anordnung der Linienelemente des Kunststoffgitters werden einzelne Kanäle für das durchströmende Fluid, wie eine Hydraulikflüssigkeit, vorgegeben. Insgesamt werden durch die erfindungsgemäße Geometrie des abstützenden Kunststoffgitters die Stütz- und Filtrationseigenschaften des Filtermediums verbessert.

Dergestalt ergeben sich innerhalb der feststehenden Gitterstruktur schlanke, eng anliegende Fäden oder Linienelemente zur Filterlage hin, was eine verbesserte Anschmiegeigenschaft des Kunststoffgitters gegenüber der darunterliegenden Filterlage des Filtermediums ergibt, was deutlich die Stabilität des Gesamtverbundes des Filtermediums verbessert. Ferner wird durch den angesprochenen Stützgitterverbund erreicht, dass die "Volumen gebenden" Fäden oder Linienelemente zur Drainageseite des Filtermediums hin orientiert sind mit der Folge, dass sich die Fadenabstände oder die Abstände zwischen den Linienelementen optimieren lassen, was wiederum die Drainagefähigkeit des Filtermediums sowie seine Durchflusseigenschaften deutlich verbessert. Durch die unterschiedliche Dicken- oder Durchmessergestaltung des Kunststoffgitters mit seinen feststehenden Knotenpunkten ergibt sich eine verbesserte Anpassungsmöglichkeit des Kunststoffgitters als Stützlage an die jeweils auftretenden Faltendichten und Filterfeinheiten für das plissierte Filtermedium.

Als besonders vorteilhaft hat es sich dabei erwiesen, bei plissierter Filterlage die Linienelemente unterschiedlichen Durchmessers, soweit sie sich kreuzen, zwischen sich einen Winkel von 50° bis 60°, vorzugsweise von etwa 55°, miteinander einschließen zu lassen. Aufgrund der unverrückbaren Anordnung der Linienelemente innerhalb des Kunststoffgitters werden insoweit die Durchlassöffnungen für das zu filtrierende Fluid immer konstant gehalten, so dass sich auch im Betrieb in vorteilhafter Weise die Durchfluss- und Stützeigenschaften für die Stützlage nicht ändern können.

Bei einer besonders bevorzugten Ausführungsform ist demgemäß vorgesehen, dass in Längsausrichtung einer jeweiligen Filterfalte der plissierten Filterlage gesehen der Abstand zwischen den Linienelementen mit den jeweils größeren Durchmessern oder Dicken, etwa dem 8- bis 12-fachen, vorzugsweise etwa dem 10-fachen Abstand zwischen den Linienelementen mit dem jeweils kleineren Durchmesser oder der jeweils kleineren Dicke beträgt.

Sofern im Nachfolgenden die Dicke oder der Durchmesser der Linienelemente angesprochen ist, bezieht sich die Durchmesserangabe im Wesentlichen auf im Querschnitt gesehen zylindrisch ausgebildete Fäden als Linienelemente bzw. die Dickenangabe richtet sich nach der größten Kantenlänge oder Ansichtsseite eines im Querschnitt gesehen beispielsweise rechteckförmigen (auch quadratischen) bzw. oval ausgestalteten Fadenquerschnitts. Insoweit können die Angaben Durchmesser oder Dicke in der folgenden Erfindungsbeschreibung als Synonym verstanden werden. Auch können innerhalb des Kunststoffgitters die Linienelemente einer Gruppe in Abstufung verschiedene unterschiedliche kleine Durchmesser oder Dicken aufweisen, wohingegen die Linienelemente der anderen Gruppe mit größerem Durchmesser hierzu gleichfalls von den Querschnittsverhältnissen gesehen abgestuft anders dimensioniert sein können.

Vorteilhafterweise sind die Linienelemente einer Gruppe jeweils äquidistant, d.h. mit gleichem Linienabstand, zueinander angeordnet. Hieraus ergibt sich der Vorteil, dass gleich große Durchlassöffnungen durch das Kunststoffgitter vorgegeben werden und somit über die Fläche des Kunststoffgitters homogene Stütz- und Filtrationseigenschaften erreicht werden. Die Durchlassöffnungen weisen bevorzugt Seitenlängen im Bereich von 900 *µ*m bis 3000 *µ*m auf, insbesondere eine erste Seitenlänge von etwa 915 *µ*m und eine zweite Seitenlänge von etwa 2908 *µ*m.

Die Linienelemente des Kunststoffgitters können quadratische Durchlassöffnungen begrenzen, anders ausgedrückt können die erste Seitenlänge und die zweite Seitenlänge der jeweiligen Durchlassöffnung gleich gewählt sein. Bei dieser Ausgestaltung des erfindungsgemäßen Filtermediums ergibt sich eine besonders gute Kombination von Stütz- und Filtrationseigenschaften. Die Linienelemente können mit einem Winkel von 45° schräg zur Längs- und Querrichtung bei ebener Mattenbahn verlaufen, so dass keine Vorzugsrichtung am Filtermedium vorgegeben ist. Typischerweise werden jedoch unterschiedliche Winkel für die Schrägstellung in Bezug zur Längsrichtung und zur Querrichtung gewählt und ein anwendungsoptimierter Fluiddurchtritt ist somit erreicht.

Die Dicke der Linienelemente kann variieren, insbesondere wobei die Linienelemente der ersten Gruppe eine von den Linienelementen der zweiten Gruppe unterschiedliche Dicke aufweisen. Durch die Verwendung von unterschiedlich dicken Linienelementen wird die vom Fluid durchströmbare Durchtrittsfläche, vorgegeben durch die Durchlassöffnungen, weiter vergrößert. Durch die Ausgestaltung, insbesondere das Material und die Dicke, der Linienelemente werden die Festigkeit und folglich die Stützeigenschaft des Kunststoffgitters festgelegt. Die Linienelemente weisen bevorzugt eine Dicke im Bereich von 300 *µ*m bis 450 *µ*m auf, wobei insbesondere die Linienelemente der ersten Gruppe eine Dicke von etwa 419 *µ*m und die Linienelemente der zweiten Gruppe eine Dicke von etwa 330 *µ*m aufweisen.

Durch die gitter- bzw. rasterförmige Anordnung der Linienelemente wird die Formstabilität und Filtrationscharakteristik des Filtermediums bedarfsgerecht eingestellt. Die Linienelemente des Kunststoffgitters können fadenartig ausgebildet sein. Zudem kann in das Kunststoffgitter mindestens ein elektrisch leitfähiges Linienelement eingearbeitet sein, wobei das elektrisch leitfähige Linienelement bevorzugt metallfrei ausgebildet ist und/oder Karbon erhält. Besonders bevorzugt ist das jeweilige elektrisch leitfähige Linienelement als Bikomponenten-Faser mit einer mit Karbon beschichteten Kunststofffaser ausgebildet.

Das Material des Kunststoffgitters umfasst in bevorzugter Weise Polybutylenterephthalat- (PBT), Polypropylen- (PP) und/oder Polyethylen- (PE) Kunststoff. Derartige Kunststoffmaterialien zeichnen sich durch eine mittlere Festigkeit, eine hohe Steifigkeit und Härte aus. Teilkristalline Polyethylenterephthalate weisen thermische Einsatzgrenzen bei -20 °C und + 100 °C, kurzzeitig bis +200 °C, auf. Sie sind beständig gegen verdünnte Säuren, aliphatische und aromatische Kohlenwasserstoffe, Öle, Fette, Ester und Alkohole. Polybutylenterephthalat besitzt im Vergleich zu Polyethylenterephthalat eine etwas geringere Festigkeit; seine Einsatzgrenzen liegen etwa bei -40 °C und +250 °C. Isotaktisches Polypropylen ist bis etwa + 150 °C einsetzbar und erweist sich als chemisch sehr beständig.

Weitere Vorteile und Merkmale der Erfindung ergeben sich aus den weiteren Ansprüchen, den Figuren und der nachfolgenden Beschreibung der Zeichnung. Die vorstehend genannten und die weiter angeführten Merkmale können jeweils in beliebigen Kombinationen an einem erfindungsgemäßen Filtermedium realisiert sein. Die in den Figuren gezeigten Merkmale sind rein schematisch und nicht maßstäblich zu verstehen. Es zeigen:
- Fig. 1: eine Draufsicht auf einen Abschnitt eines Kunststoffgitters eines aus dem Stand der Technik bekannten Filtermediums;
- Fig. 2: eine Draufsicht auf einen Abschnitt eines Kunststoffgitters eines erfindungsgemäßen Filtermediums mit darunterliegend angeordneter Filterlage;
- Fig. 3: eine Ansicht auf einen Teil des nunmehr plissierten Filtermediums nach der Fig. 2; und
- Fig. 4: eine perspektivische Darstellung einer Fertigungsstraße zur Herstellung des erfindungsgemäß ausgestalteten Kunststoffgitters.

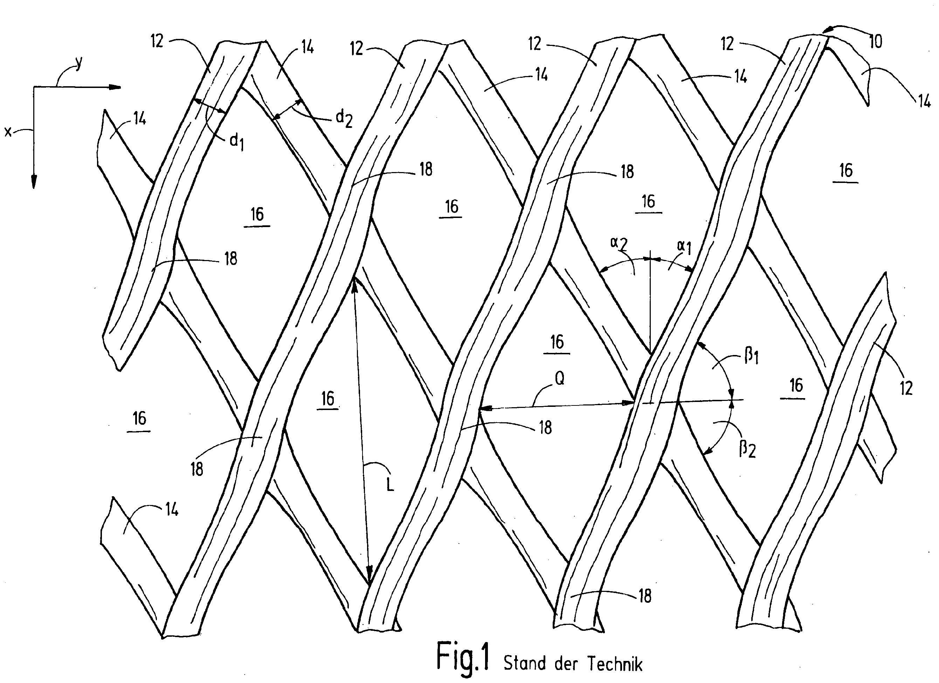

Fig. 1 zeigt in Draufsicht einen Abschnitt eines Kunststoffgitters 10 nach dem Stand der Technik. Das Kunststoffgitter 10 weist im Wesentlichen die Form einer Bahn auf mit einer ersten Gruppe von ersten Linienelementen 12 und einer zweiten Gruppe von zweiten Linienelementen 14. Die ersten Linienelemente 12 verlaufen äquidistant parallel zueinander und sind schräg zur Längsrichtung X, unter Einschluss eines ersten Winkels α₁, und schräg zur Querrichtung Y, unter Einschluss eines weiteren ersten Winkels β₁, angeordnet. In entsprechender Weise verlaufen die zweiten Linienelemente 14 parallel zueinander und schräg zu den beiden Richtungen X, Y, unter Einschluss von zweiten Winkeln α₂, β₂.

Die Linienelemente 12, 14 begrenzen zwischen sich Durchlassöffnungen 16, welche im Wesentlichen gleichförmig ausgebildet sind und jeweils eine Rautenform mit einer ersten Diagonale mit einer Länge von L = 2431,8 *µ*m und einer zweiten Diagonale mit einer Länge von Q = 1273 *µ*m aufweisen. Die Rauten- bzw. Diamantstruktur der rautenförmigen Durchlassöffnungen 16 ist durch die Anordnung der beiden Gruppen von ersten und zweiten Linienelementen 12, 14 vorgegeben. Bei einer Weiterverarbeitung des Kunststoffgitters 10 gibt die Längsrichtung X eine Richtung für den Einlauf in eine Falzmaschine vor.

Die ersten Linienelemente 12 weisen im Wesentlichen die gleiche Dicke d₁ = 298 *µ*m auf, entsprechend die zweiten Linienelemente 14 eine Dicke d₂ = 292 *µ*m. In der Darstellung der Fig. 1 liegen die ersten Linienelemente 12 auf den zweiten Linienelementen 14 auf und sind an Kreuzungsstellen 18 mit diesen fest verbunden, anders ausgedrückt an diesen fixiert. Es ist jedoch auch denkbar, die Linienelemente 12, 14 für den Erhalt des Kunststoffgitters 10 als Ganzes einstückig aus einem Kunststoffmaterial auszubilden. Die beiden Gruppen der Linienelemente 12, 14 sind zueinander schräg angeordnet und schließen zueinander in Längsrichtung X einen spitzen Winkel, die Summe der beiden Winkel α₂ + α₁ < 90°, und in Querrichtung Y einen stumpfen Winkel, die Summe der weiteren Winkel β₁ + β₂ > 90°, ein. Es versteht sich, dass die beiden Gruppen der Linienelemente 12, 14 derart zueinander orientiert sein können, dass ein stumpfer Winkel in Längsrichtung X und ein spitzer Winkel in Querrichtung Y eingeschlossen ist.

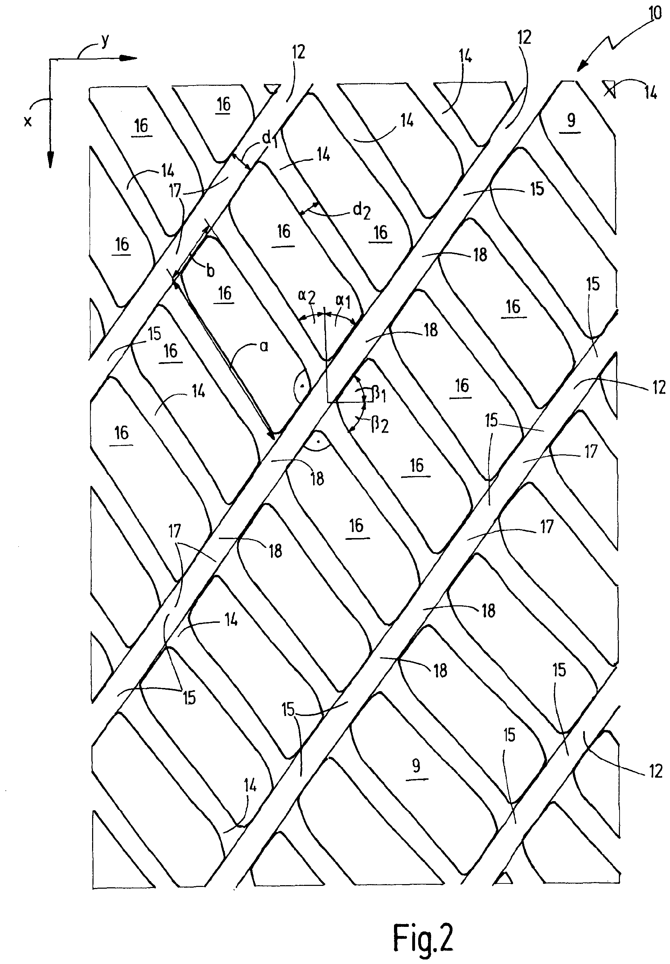

Fig. 2 zeigt demgegenüber eine erfindungsgemäße Ausgestaltung des Kunststoffgitters 10 mit der Besonderheit, dass die beiden Gruppen der Linienelemente 12, 14 rechtwinklig zueinander orientiert sind. Folglich sind die Winkel α₁ bis β₂, unter denen die Linienelemente 12, 14 die Längsrichtung X und die Querrichtung Y schneiden, anders ausgedrückt schräg zu diesen gestellt sind, derart zu wählen, dass die der jeweiligen Richtung X, Y zugeordneten Winkel α₁ bis β₂ in der Summe 90° ergeben, α₁ + α₂ = 90 ° und β₁ + β₂ = 90°. In dem in Fig. 2 gezeigten Ausführungsbeispiel beträgt die Dicke d₁ der ersten Linienelemente 12 d₁ = 419 *µ*m und die Dicke d₂ der zweiten Linienelemente 14 d₂ = 330 *µ*m. Die Linienelemente 12, 14 der jeweiligen Gruppe sind äquidistant parallel zueinander verlaufend angeordnet, so dass gleichförmige Durchlassöffnungen 16 mit einer durch den Abstand der ersten Linienelemente 12 vorgegebenen ersten Seitenlänge a = 2908 *µ*m und einer durch den Abstand der zweiten Linienelemente 14 vorgegebenen zweiten Seitenlänge b = 915 *µ*m vorgegeben sind. Die Größe a x b der rechteckförmigen Durchlassöffnungen 16 definiert die zur Verfügung stehende Fluiddurchtrittsfläche und folglich die Fluiddurchlässigkeit des Kunststoffgitters 10.

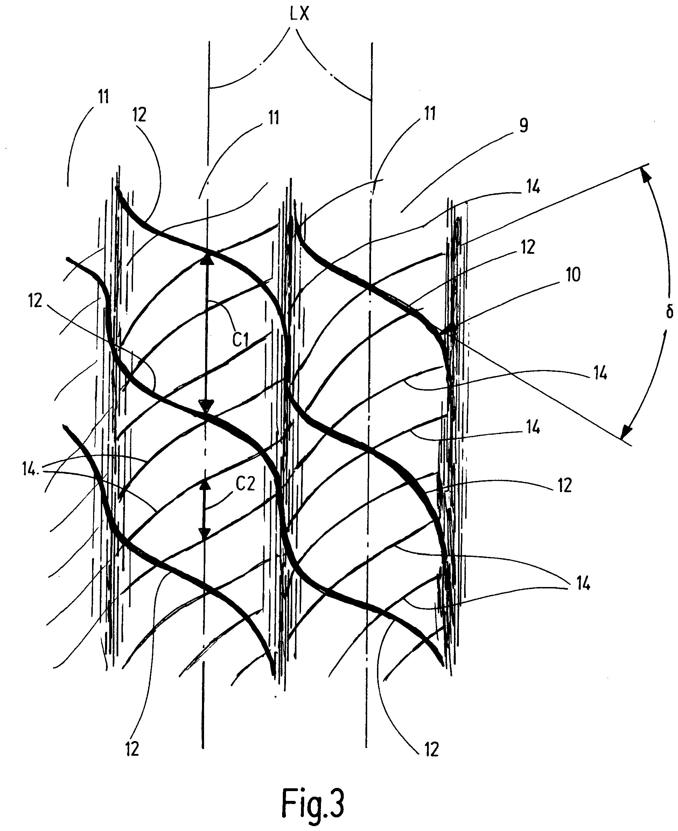

Wie insbesondere die Fig. 3 zeigt, die eine plissierte Filterlage 9 betrifft, die jedoch nur ausschnittsweise einzelne Filterfalten 11 des sternförmig gefalteten oder plissierten Filtermediums zu einer Art Hohlzylinder des Filterelements (nicht dargestellt) geformt zeigt, ist die dahingehende äußere Filterlage 9 mit dem in Fig. 2 flächig dargestellten Kunststoffgitter 10 umgeben bzw. umfasst. Die einzelnen Filterfalten 11 wölben sich daher in bekannter Weise dem Betrachter von Fig. 3 zugewandt in Bergwölbungen vor, wobei jeweils benachbarte Filterfalten 11 im Talgrund gleichfalls in bogenförmigem Verlauf miteinander verbunden sind.

Die Linienelemente 14 mit dem jeweils geringeren Durchmesser d₂ befinden sich in unmittelbarer Anlage mit der jeweiligen Oberseite der Filterlage 9 des insoweit plissierten Filtermediums. Demgemäß sind die Linienelemente 12 mit demgegenüber jeweils einem größeren Durchmesser d₁ mit größerer Beabstandung voneinander über den Linienelementen 14 mit dem geringeren Durchmesser d₁ angeordnet. Insoweit weisen also die Linienelemente 14 einen größeren Abstand gegenüber der zuordenbaren benachbarten Filterlage 9 auf und sind über die Linienelemente 14 zu der Filterlage 9 auf Abstand gehalten. In Anströmrichtung zum Filtermaterial hin gesehen und mithin zur Filterlage 9 bilden also die eng anliegenden dünnen Fäden oder Linienelemente 14 eine ideale Abstützung und Schutz für die empfindliche Filterlage 9 aus. In Abströmrichtung hingegen bilden die volumengebenden Fäden 12 in einem optimierten Abstand gegenüber der Filterlage 9 große Strömungsquerschnitte aus mit der Folge, dass nur minimale Strömungswiderstände gebildet sind, so dass eine Art optimierte Drainagelage über das Stützgitter 10 erreicht ist.

Sofern gemäß der Darstellung nach der Fig. 3 die Filterlage 9 plissiert ist, kreuzen sich die Linienelemente 12, 14 unterschiedlichen Durchmessers und schließen zwischen sich einen fiktiven Winkel δ von 50 bis 60°, vorzugsweise von etwa 55° miteinander ein. Des Weiteren ist vorgesehen, dass in Längsausrichtung LX auf der Oberseite einer jeweiligen Filterfalte 11 der plissierten Filterlage 9 gesehen der Abstand c₁ zwischen den Linienelementen 12 mit den jeweils größeren Durchmessern d₁ etwa dem 8- bis 12-fachen, vorzugsweise etwa dem 10-fachen Abstand c₂ zwischen den Linienelementen 14 mit dem jeweils kleineren Durchmesser d₂ beträgt. So besteht beim konkreten Ausführungsbeispiel der Abstand c₁ gemäß der zweiten Seitenlänge b etwa 2908 *µ*m und der Abstand c₂ gemäß der ersten Seitenlänge a etwa 915 *µ*m.

Wie weiter die Fig. 2 und 3 verdeutlichen, sind in Blickrichtung auf die Fig. 2 und 3 gesehen, die Linienelemente 12 mit der größeren Dicke d₁ über den Linienelementen 14 mit der geringeren Dicke d₂ angeordnet. Wird nun das genannte Stützgitter 10 unter Bildung der in Fig. 3 näher dargestellten plissierten Filtermatte in Falten 11 gelegt, kommen die dickeren Linienelemente 12 zwischen den benachbarten Falten 11 aufeinander zu liegen, wobei sich dahingehend regelmäßig Stellen der Anlage bilden mit der Folge, dass die darunterliegenden dünnen Linienelemente 14 dann entsprechend über die doppelte Dicke oder Breite der Linienelemente 12 voneinander beabstandet sind. Dergestalt entsteht dann innerhalb der jeweiligen Falte 11 ein Leitungs- oder Drainagekanal, der relativ widerstandsfrei die Fluidführung innerhalb des plissierten Filtermediums ermöglicht. Wie ferner die Fig. 2 zeigt, sind bedingt durch das Herstellverfahren, insbesondere an den Knoten- oder Kreuzungsstellen 15 von dicken Linienelementen 12 mit dünnen Linienelementen 14, an jeder Stelle eines Kreuzungspunktes 15 oder Untergriffs der nachfolgende Abschnitt eines Linienelementes 14 zu dem vorangehenden Linienelementeteil um einen vorgebbaren Abstand oder Versatz 17 zueinander versetzt mit der Folge, dass wiederum im plissierten Aufbau des Filtermediums die rechteckförmigen Durchtrittsstellen 16 zwischen den einzelnen Falten im Wesentlichen aufeinander zu liegen kommen, so dass auch insoweit ein ungestörter Fluiddurchtritt durch dass sich dann anschließende filternde Filtermaterial erreicht ist.

Anstelle der rechteckförmigen Durchlassstellen 16 könnten auch quadratisch gebildete Durchlassstellen 16 aus dem Kunststoffgitter 10 erhalten werden, sofern man jedes zweite Linienelement 14 mit dem geringeren Durchmesser d₂ entsprechend entfallen lässt. Der in Fig. 2 dargestellte Versatz an der Versatzstelle 17 kann auch entfallen, so dass alle Linienelemente 14 zueinander parallel verlaufend angeordnet sind ebenso wie die Linienelemente 12 innerhalb der Gitterstruktur 10.

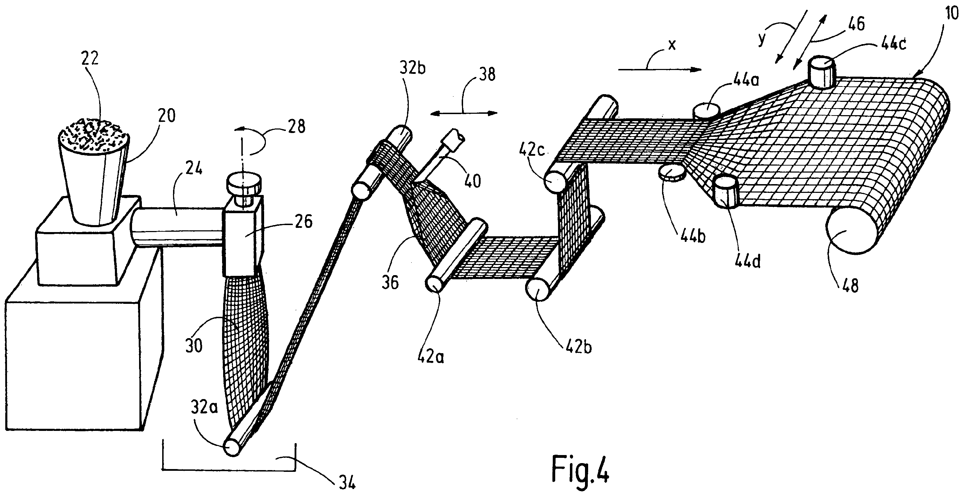

In Fig. 4 ist ein Verfahren zur Herstellung des Kunststoffgitters 10 skizziert. In einen Extruder 20 wird Kunststoffgranulat gegeben und dort verflüssigt. Über eine Schnecke 24 gelangt das verflüssigte Granulat zu einem Austrag 26, an dessen Ende sich nicht gezeigte Düsen auf gegenläufig drehenden Ringen angeordnet befinden. Beim Passieren der sich in oder gegen eine Drehrichtung 28 drehenden Düsen entsteht aus dem verflüssigten Kunststoffgranulat ein Schlauch 30. Der extrudierte Schlauch 30 wird zum Abkühlen über eine Umlenkrolle 32a durch ein Wasserbad 34 geführt.

Nach einer weiteren Umlenkrolle 32b wird eine Längsstreckung 38 in die Längsrichtung X einer Bahn 36 durchgeführt. Weiter passiert der Schlauch 30 eine Schneidvorrichtung 40 und wird durch diese in Längsrichtung X aufgeschnitten, so dass die Bahn 36 entsteht. Über weitere Rollen 42a, 42b und 42c, welche als Kalander- oder Umlenkrollen ausgebildet sind, wird die längsgestreckte Bahn 36 zu einer Anordnung von Seitenführungselementen 44a bis 44d geführt, wo eine Querstreckung 46 in die Querrichtung Y durchgeführt wird. Parallel findet ein Randstreifen der Bahn 36 statt. Die Längsstreckung 38 und die Querstreckung 46 werden entsprechend der in der Bahn 36 auszubildenden Gitterstruktur, wie der Rechteckgröße, unter Schrägstellung der Gruppen der Linienelemente 12, 14 zur Längsrichtung X und zur Querrichtung Y gewählt und durchgeführt.

Beim Durchführen von Längs- und Querstreckung 38, 46 ist das Kunststoffmaterial noch nicht vollständig ausgehärtet und die Bahn 36 folglich noch hochflexibel. Eine endgültige Aushärtung des Kunststoffmaterials findet nach der Querstreckung 46 statt. Das fertiggestellte Kunststoffgitter 10 wird zur Lagerung und/oder zum Transport auf eine Bahnrolle 48 aufgewickelt und entsprechend der auf der Bahnrolle 48 aufzuwickelnden Länge der Bahn 36 in Querrichtung Y durchgeschnitten bzw. abgetrennt. Anstelle der Bahnrolle 48 kann sich eine Vorrichtung zum Verbinden des Kunststoffgitters 10 mit einer Filterlage des Filtermediums und/oder eine Falzmaschine für das Filtermedium anschließen.

## Patentansprüche

1. Filtermedium zum Abreinigen von Fluiden, umfassend:
- mindestens eine aus einem Filtermaterial gebildete Filterlage (9), die eine vorzugsweise plissierte Bahnform des Filtermediums mit einer Längsrichtung (X) und einer Querrichtung (Y) vorgibt, und
- mindestens ein Kunststoffgitter (10), das als Stützlage an mindestens einer Filterlage (9) anliegt und Linienelemente (12, 14) aufweist, die miteinander verbunden zwischen sich Durchlassöffnungen (16) begrenzen,
wobei die Linienelemente (14) mit einem geringeren Durchmesser (d₂) in unmittelbarer Anlage mit der jeweiligen Filterlage (9) des Filtermediums sind und wobei die Linienelemente (12) mit demgegenüber jeweils einem größeren Durchmesser (d₁) und mit größerer Beabstandung voneinander, als dies bei den Linienelementen (14) mit geringerem Durchmesser (d₂) der Fall ist, die genannten Linienelemente (14) beabstandet zu der zuordenbaren Filterlage (9) übergreifen,
**dadurch gekennzeichnet, dass** die Linienelemente (14) mit den kleineren Durchmessern (d₂) an dem jeweiligen Knoten (15) eine Versatzstelle (17) aufweisen und dass der Versatz an dieser Versatzstelle (17) etwa dem kleineren Durchmesser (d₂) der Linienelemente (14) entspricht.

2. Filtermedium nach Anspruch 1, **dadurch gekennzeichnet, dass** bei plissierter Filterlage (9) die Linienelemente (12, 14) unterschiedlichen Durchmessers (d₁, d₂), soweit sie sich kreuzen, zwischen sich einen Winkel (δ) von 50° bis 60°, vorzugsweise von etwa 55° miteinander einschließen.

3. Filtermedium nach Anspruch 1 oder 2, **dadurch gekennzeichnet, dass** in Längsausrichtung (LX) einer jeweiligen Filterfalte (11) der plissierten Filterlage (9) gesehen der Abstand (c₁) zwischen den Linienelementen (12) mit den jeweils größeren Durchmessern (d₁) etwa dem 8- bis 12-fachen, vorzugsweise etwa dem 10-fachen Abstand (c₂) zwischen den Linienelementen (14) mit dem jeweils kleineren Durchmesser (d₂) beträgt.

4. Filtermedium nach einem der vorhergehenden Ansprüche, **dadurch gekennzeichnet, dass** die Durchlassöffnungen (16) Seitenlängen (a, b) im Bereich von 900 *µ*m bis 3000 *µ*m aufweisen, insbesondere eine erste Seitenlänge (a) von etwa 915 *µ*m und eine zweite Seitenlänge (b) von etwa 2908 *µ*m.

5. Filtermedium nach einem der vorhergehenden Ansprüche, **dadurch gekennzeichnet, dass** die Linienelemente (12, 14) des Kunststoffgitters (10) quadratische Durchlassöffnungen (16) begrenzen.

6. Filtermedium nach einem der vorhergehenden Ansprüche, **dadurch gekennzeichnet, dass** die Dicke oder der Durchmesser (d₁, d₂) der Linienelemente (12, 14) variiert, vorzugsweise dass die Linienelemente der ersten Gruppe (12) eine von den Linienelementen der zweiten Gruppe (14) unterschiedliche Dicke oder Durchmesser (d₁) aufweisen.

7. Filtermedium nach einem der vorhergehenden Ansprüche, **dadurch gekennzeichnet, dass** die Linienelemente (12, 14) einen Durchmesser (d₁, d₂) im Bereich von 300 *µ*m bis 450 *µ*m aufweisen, vorzugsweise dass die Linienelemente der ersten Gruppe (12) einen Durchmesser (d₁) von etwa 419 *µ*m und die Linienelemente der zweiten Gruppe (14) ein einen Durchmesser (d₂) von etwa 330 *µ*m aufweisen.

8. Filtermedium nach einem der vorhergehenden Ansprüche, **dadurch gekennzeichnet, dass** das Material des Kunststoffgitters (10) Polybutylenterephthalat- (PBT), Polypropylen- (PP) und/oder Polyethylen-(PE) Kunststoff aufweist.

9. Filtermedium nach einem der vorhergehenden Ansprüche, **dadurch gekennzeichnet, dass** die Linienelemente der ersten Gruppe (12) mit den Linienelementen der zweiten Gruppe (14) an den Kreuzungsstellen des Gitters (10) feste Knoten (15) ausbilden, an denen die Linienelemente unverschiebbar zueinander in ihrer Lage gehalten sind.

## Claims

1. Filter medium for purifying fluids, comprising:
- at least one filter layer (9), formed from a filter material, which defines a preferably pleated path of the filter medium with a longitudinal direction (X) and a transverse direction (Y), and
- at least one plastic grid (10), which comprises linear elements (12, 14) in contact with at least one filter layer (9) as support layer, which joined together delimit passage openings (16),
wherein the linear elements (14) with a smaller diameter (d₂) are in direct contact with the respective filter layer (9) of the filter medium and wherein the linear elements (12) with respectively individually larger diameter (d₁) by comparison and with a larger spacing between them than is the case with the linear elements (14) having smaller diameter (d₂), fit over the said linear elements (14) spaced away from the associated filter layer (9),
**characterised in that** the linear elements (14) with the smaller diameters (d₂) have a displaced position (17) at the respective nodes (15) and that the displacement at this displacement position (17) corresponds approximately to the smaller diameter (d₂) of the linear elements (14).

2. Filter medium in accordance with claim 1, **characterised in that** with pleated filter layer (9) the linear elements (12, 14) of different diameter (d₁, d₂), where they cross, enclose between them an angle (δ) of 50° to 60°, preferably of approximately 55°.

3. Filter medium in accordance with claim 1 or 2, **characterised in that**, viewed from the longitudinal direction (LX) of a particular filter fold (11) of the pleated filter layer (9), the distance (c₁) between the linear elements (12) with the larger individual diameters (d₁) amounts to 8 to 12 times, preferably approximately 10 times the distance (c₂) between linear elements (14) with the individually smaller diameters (d₂).

4. Filter medium in accordance with one of the preceding claims, **characterised in that** the passage openings (16) have side lengths (a, b) in the range of 900 *µ*m to 3000 *µ*m, in particular a first side length (a) of approximately 915 *µ*m and a second side length (b) of approximately 2908 *µ*m.

5. Filter medium in accordance with one of the preceding claims, **characterised in that** the linear elements (12, 14) of the plastic grid (10) define square passage openings (16).

6. Filter medium in accordance with one of the preceding claims, **characterised in that** the thickness or the diameter (d₁, d₂) of the linear elements (12, 14) varies, preferably that the linear elements of the first group (12) have a thickness or diameter (d₁) differing from the linear elements of the second group (14).

7. Filter medium in accordance with one of the preceding claims, **characterised in that** the linear elements (12, 14) have a diameter (d₁, d₂) in the range from 300 *µ*m to 450 *µ*m, preferably that the linear elements of the first group (12) have a (d₁) of approximately 419 *µ*m and the linear elements of the second group (14) have a diameter (d₂) of approximately 330 *µ*m.

8. Filter medium in accordance with one of the preceding claims, **characterised in that** the material of the plastic grid (10) comprises polybutylene terephthalate (PBT), polypropylene (PP) and/or polyethylene (PE) plastic.

9. Filter medium in accordance with one of the preceding claims, **characterised in that** the linear elements of the first group (12) form fixed nodes (15) with the linear elements of the second group (14) at the intersection points of the grid (10), on which the linear elements are held undisplaceably in their position.

## Revendications

1. Milieu filtrant pour épurer des fluides, comprenant :
- au moins une couche (9) filtrante, qui est formée d'une matière filtrante et qui prescrit une forme en bande, de préférence plissée, du milieu filtrant, ayant une direction (X) longitudinale et une direction (Y) transversale et
- au moins une grille (10) en matière plastique, qui s'applique comme couche d'appui à au moins une couche (9) filtrante et qui a des éléments (12, 14) linéaires, qui, reliés les uns aux autres, délimitent entre eux des ouvertures (16) de passage,
dans lequel les éléments (14) linéaires, d'un diamètre (d₂) plus petit, sont en contact direct avec la couche (9) filtrante respective du milieu filtrant et dans lequel les éléments (12) linéaires, ayant, en revanche, respectivement, un diamètre (d₁) plus grand et à une distance plus grande entre eux que ce n'est le cas pour les éléments (14) linéaires de diamètre (d₂) plus petit, chevauchent lesdits éléments (14) linéaires en étant à distance de la couche (9) filtrante, qui peut être associée,
**caractérisé en ce que** les éléments (14) linéaires de diamètre (d₂) plus petit, ont, au noeud (15) respectif, un point (17) de déport et **en ce que** le déport en ce point (17) de déport correspond à peu près au diamètre (d₂) plus petit des éléments (14) linéaires.

2. Milieu filtrant suivant la revendication 1, **caractérisé en ce que**, pour une couche (9) filtrante plissée, les éléments (12, 14) linéaires de diamètres (d₁, d₂) différents, dans la mesure où ils se croisent, font entre eux un angle (δ) de 50° à 60°, de préférence d'environ 55°.

3. Milieu filtrant suivant la revendication 1 ou 2, **caractérisé en ce que**, considéré dans la direction (LX) longitudinale d'un pli (11) de filtre de la couche (9) filtrante plissée, la distance (c₁) entre les éléments (12) linéaires de diamètre (d₁) plus grand représente environ de 8 à 12 fois, de préférence environ 10 fois, la distance (c₂) entre les éléments (14) linéaires de diamètre (d₂) plus petit.

4. Milieu filtrant suivant l'une des revendications précédentes, **caractérisé en ce que** les ouvertures (16) de passage ont des longueurs (a, b) de côté dans la plage de 900µm à 3000 µm, notamment une première longueur (a) de côté d'environ (915) µm et une deuxième longueur (b) de côté d'environ 2908 µm.

5. Milieu filtrant suivant l'une des revendications précédentes, **caractérisé en ce que** les éléments (12, 14) linéaires de la grille (10) en matière plastique délimitent des ouvertures (16) de passage carrées.

6. Milieu filtrant suivant l'une des revendications précédentes, **caractérisé en ce que** l'épaisseur ou le diamètre (d₁, d₂) des éléments (12, 14) linéaires varie, de préférence **en ce que** les éléments linéaires du premier groupe (12) ont une épaisseur ou un diamètre (d₁) différent de celui des éléments linéaires du deuxième groupe (14).

7. Milieu filtrant suivant l'une des revendications précédentes, **caractérisé en ce que** les éléments (12, 14) linéaires ont un diamètre (d₁, d₂) dans la plage de 300 µm à 450 µm, de préférence **en ce que** les éléments linéaires du premier groupe (12) ont un diamètre (d₁) d'environ 419 µm et les éléments linéaires du deuxième groupe (14) un diamètre (d₂) d'environ 330 µm.

8. Milieu filtrant suivant l'une des revendications précédentes, **caractérisé en ce que** la matière de la grille (10) en matière plastique comprend du polytéréphtalate de de butylène (PBT), du polypropylène (PP) et/ou du polyéthylène (PE).

9. Milieu filtrant suivant l'une des revendications précédentes, **caractérisé en ce que** les éléments linéaires du premier groupe (12) forment, avec les éléments linéaires du deuxième groupe (14) aux points de croisement de la grille (10), des noeuds (15) fixes où les éléments linéaires sont maintenus en leur position, les uns par rapport aux autres, sans possibilité de se déplacer.
